(19) Europäisches Patentamt

European Patent Office

Office européen des brevets

(11) Veröffentlichungsnummer: **0 050 807**
**B1**

(12) # EUROPÄISCHE PATENTSCHRIFT

(45) Veröffentlichungstag der Patentschrift:
18.07.84

(51) Int. Cl.³: **B 23 K 9/09**

(21) Anmeldenummer: **81108397.1**

(22) Anmeldetag: **16.10.81**

(54) Einrichtung für das Lichtbogenschweissen.

(30) Priorität: **24.10.80 SE 8007479**

(43) Veröffentlichungstag der Anmeldung:
**05.05.82 Patentblatt 82/18**

(45) Bekanntmachung des Hinweises auf die Patenterteilung:
**18.07.84 Patentblatt 84/29**

(84) Benannte Vertragsstaaten:
**AT BE CH DE FR GB IT LI LU NL SE**

(56) Entgegenhaltungen:
**DE - A - 2 036 893**
**GB - A - 1 209 913**
**US - A - 3 308 265**

**PATENTS ABSTRACTS OF JAPAN, Band 4 Heft 187, 23.
Dezember 1980, Seite 669M48**

(73) Patentinhaber: **ESAB Aktiebolag,
Box 8004 Herkulesgatan 72, S-402 77 Göteborg (SE)**

(72) Erfinder: **Johansson, Jan Gunnar, Mänstigen 14,
S-695 00 Laxä (SE)**
Erfinder: **Henningsen, Christian Johannes, Mänstigen 1,
S-695 00 Laxä (SE)**
Erfinder: **Köster, Arvo, Gustav Vasas väg 14,
S-695 00 Laxä (SE)**

(74) Vertreter: **Frisch, Kurt, c/o ESAB AB Box 8004,
S-402 77 Göteborg (SE)**

## Beschreibung

Die Erfindung bezieht sich auf eine Einrichtung für das Lichtbogenschweißen mit einem an ein Wechselstromnetz angeschlossenen Schweißgleichrichter für die Abgabe einer pulsierenden Gleichspannung, die periodisch im Takt der Netzfrequenz oder Vielfachen davon während eines Teiles der Periode Null ist, mit einer mit Eisenkern versehenen Schweißdrossel, deren Wicklung zwischen eine der beiden Klemmen des Schweißgleichrichters und eine aus Schweißelektrode und Werkstück gebildete, an die andere Schweißgleichrichterklemme angeschlossene Schweißstelle eingeschaltet ist, und mit einem mit den Klemmen verbundenen Glättungsstromkreis, der eine Glättungsdrossel und einen Kondensator enthält.

Die gleichgerichtete Spannung eines Gleichrichters, der an ein einphasiges Wechselstromnetz angeschlossen ist, weist periodisch auftretende Nullstellen auf. Bei Schweißgleichrichtern, die mit Thyristoren bestückt und an ein mehrphasiges Wechselstromnetz angeschlossen sind, treten ebenfalls periodisch wiederkehrende spannungslose Intervalle auf, wenn die Zündung der Thyristoren so spät erfolgt, daß die abgegebene Gleichspannung nur aus einzelnen durch Pausen getrennten Pulsen besteht.

Wenn die Spannung Null oder sehr gering ist, erlöscht der Schweißlichtbogen, da dieser für seinen Bestand eine im wesentlichen vom Kathoden- und Anodenmaterial und von der Lichtbogenlänge abhängige Mindestspannung erfordert. Die Wiederzündung kann erst erfolgen, wenn die Spannung wieder diesen Grenzwert erreicht hat. Gewisse Schweißelektrodentypen, beispielsweise umhüllte Elektroden, enthalten lichtbogenstabilisierende Zusätze, die während der stromlosen Intervalle zwischen Arbeitsstück und Elektrode eine jonisierte Atmosphäre aufrecht erhalten, die die Wiederzündung des Lichtbogens wesentlich erleichtert.

Blanke Drahtelektroden, die beim Schutzgasschweißen verwendet werden, sind üblicherweise mit solchen Zusätzen nicht versehen. Es müssen daher andere Vorkehrungen getroffen werden, um einen störungsfreien Schweißbetrieb mit einem derart pulsierenden Gleichstrom zu ermöglichen.

Es ist durch die GB-A-1 284 636 und US-A-3 308 265 bereits bekanntgewordenen Schweißgleichrichter mit Stromkreisen für die Glättung der pulsierenden Gleichspannung zu versehen. Es werden dafür zusätzliche, von der Schweißdrossel getrennte Glättungsdrosseln vorgeschlagen. In der JP-A-55-133 877 wird eine Stromquelle für das Impulsschweißen beschrieben, die aus einer Grundstromquelle und einer Impulsstromquelle mit einer teilweise gemeinsamen Schweißdrossel besteht. Der von einem Thyristorgleichrichter gelieferte Grundstrom durchfließt die gesamte Schweißdrosselwicklung, während der Impulsstrom nur einen Teil der Wicklung durchfließt. Eine Glättung des Grundstromes oder des Impulsstromes zur Vermeidung von stromlosen Intervallen ist nicht vorgesehen.

Die vorliegende Erfindung hat sich zur Aufgabe gestellt eine Einrichtung zu schaffen, die stromlose Zustände während des Schweißens ausschließt und einen geringen Aufwand an Schaltelementen erfordert. Die Erfindung besteht darin, daß die Wicklung der Glättungsdrossel eine auf dem Eisenkern der Schweißdrossel angebrachte Zusatzwicklung ist, die mit einem Anschluß mit der Schweißdrosselwicklung derart verbunden ist, daß die Wicklungen in Serie geschaltet sind, daß der Kondensator zwischen einen anderen Anschluß der Zusatzwicklung und der anderen Schweißgleichrichterklemme geschaltet ist und daß ein vom Wechselstromnetz gespeister Ladegleichrichter an den anderen oder einen weiteren Anschluß der Zusatzwicklung angeschlossen ist, wobei das Windungsverhältnis zwischen Zusatzwicklung und Schweißdrosselwicklung, die magnetische Kupplung zwischen den beiden Wicklungen und die Kapazität des Kondensators derart gewählt sind, daß während des Schweißens der absolute Wert des Schweißstroms eine bestimmte Größe nicht unterschreitet.

Der Anschluß des Ladestromkreises an das Wechselstromnetz kann unmittelbar oder durch Zwischenschaltung eines Teiles oder des ganzen Schweißgleichrichters erfolgen.

Ist die pulsierende Spannung des Schweißgleichrichters genügend groß, fließt der Schweißstrom durch den Schweißgleichrichter und der Schweißdrossel zur Schweißstelle, während der Ladegleichrichter vom Ladestrom des Kondensators durchflossen wird. Wenn die Spannung sinkt, strebt die EMK der aus Schweißdrosselwicklung und Zusatzwicklung bestehenden Seriendrossel den Strom in der Schweißdrosselwicklung aufrecht zu erhalten, was durch die Entladung des Kondensators unterstützt wird. Der Entladestrom des Kondensators wird hierbei durch das Windungszahlverhältnis zwischen Schweißdrosselwicklung und Zusatzwicklung und der magnetischen Kupplung zwischen den beiden Wicklungen beeinflußt.

Die erfindungsgemäße Anordnung von Schweißdrosselwicklung und Zusatzwicklung auf einem gemeinsamen Eisenkern ist für die Beeinflussung des Schweißstromes dabei sehr vorteilhaft.

Gemäß einer bevorzugten Ausführungsform der Erfindung ist der Ladegleichrichter durch die beiden Klemmen des Schweißgleichrichters an das Wechselstromnetz angeschlossen, wobei ein mit dem Ladegleichrichter und der Zusatzwicklung parallelgeschalteter Gleichrichter in seiner Durchlaßrichtung zumindest einen Teil des vom Wechselstromnetz an die Schweißstelle abgegebenen Stromes führt. Ein eigener direkter Anschluß an das Wechselstromnetz ist nicht erforderlich, was die Schaltung insbesondere für an ein Mehrphasennetz angeschlossene Schweißgleichrichter vereinfacht.

Gemäß der Erfindung ist es vorteilhaft, daß die Zusatzwicklung mit mehreren Anzapfungen für den Anschluß des Kondensators und des Ladegleichrichters versehen ist. Durch den Anschluß des Ladegleichrichters und des Kondensators an verschiedene Anzapfungen der Zusatzwicklung ergeben sich verschiedene Schaltungsvarianten, die unterschiedliche Stromkurven und Schweißverhalten ergeben. Die passenden Anzapfungen werden vorzugsweise durch Versuch ausgewählt.

Beim Kurzlichtbogenschweißen treten zwischen Elektrode und Arbeitsstück in rascher Folge Kurzschlüsse auf. Dabei ist es wünschenswert, daß der dynamische Kurzschlußstrom nicht zu groß wird, um die dadurch verursachten Spritzverluste möglichst gering zu halten. Wird die Schweißdrosselwicklung mit der Zusatzwicklung magnetisch lose gekuppelt, wird auch der Anteil des Entladestromes im Schweißstrom verringert. Gemäß der Erfindung ist es daher vorteilhaft, daß die Schweißdrosselwicklung und die Zusatzwicklung auf einem nicht geschlossenen Eisenkern, vorzugsweise einem I-Kern, nebeneinander aufgewickelt sind.

Die Erfindung wird nun anhand der Zeichnung, die ein Ausführungsbeispiel zeigt, näher erläutert.

Fig. 1 zeigt ein Schaltschema einer Schweißstromquelle.

Fig. 2a—2d zeigen verschiedene Spannungs- und Stromkurven.

Fig. 3 zeigt etwas schematisch eine Schweißdrossel.

Fig. 4—6 zeigen verschiedene andere Ausgestaltungen des Schaltschemas.

Ein Transformator 1 ist mit seiner Primärwicklung 2 an ein Einphasennetz angeschlossen. Die Primärwicklung ist mit Anzapfungen 3 für die Einschaltung einer bestimmten Windungszahl zur Einstellung einer passenden Spannung an der Sekundärwicklung 4 versehen, an dessen Klemmen ein Ladegleichrichter 5 und ein Schweißgleichrichter 6 in Brückenschaltung angeschlossen sind. An die beiden Gleichstromklemmen 7, 8 des Schweißgleichrichters sind zwei Leiter 9, 10 angeschlossen. Der Leiter 10 verbindet die Klemme 8 des Schweißgleichrichters mit einem Arbeitsstück 11. Der Leiter 9 ist an eine Schweißdrosselwicklung 13 angeschlossen, die mit einer in Serie geschalteten Zusatzwicklung 14 eine Seriendrossel 12 bildet. Die Schweißdrosselwicklung 13 ist durch einen Leiter 15 mit einer Schweißelektrode 16 verbunden. Die Zusatzwicklung hat mehrere Anzapfungen 17. An eine dieser Anzapfungen ist der Ladegleichrichter 5 und ein Kondensator 18 angeschlossen. Der Kondensator ist auch noch mit der Klemme 8 des Schweißgleichrichters 6 verbunden.

Die Anzahl der eingeschalteten Windungen der Zusatzwicklung 14 ist vorzugsweise größer als die Windungszahl der Schweißdrosselwicklung. Ein Windungszahlverhältnis zwischen Zusatzwicklung und Schweißdrosselwicklung von 1,5 bis 5 erwies sich als besonders vorteilhaft.

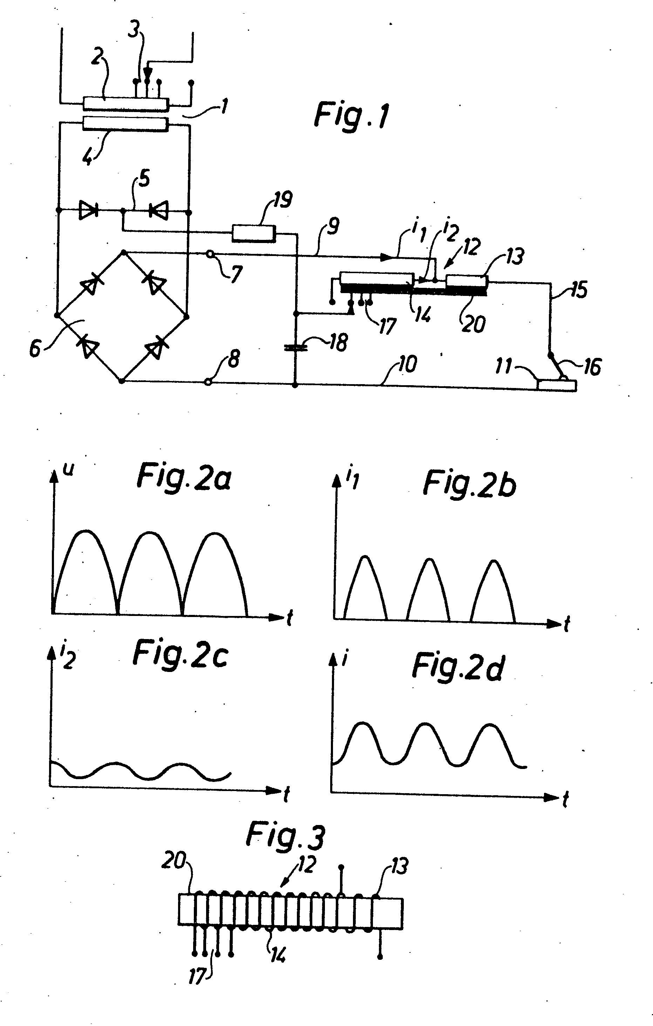

Bei einem kurzschlußfreien Schweißverlauf, der nahezu mit einer resistiven Belastung verglichen werden kann, hat die Spannung zwischen den Klemmen 7, 8 die in Fig. 2a gezeigte Kurvenform. Der vom Schweißgleichrichter 6 abgegebene Strom $i_1$, der durch den Leiter 9 fließt, besitzt eine in Fig. 2b gezeigte Kurvenform. Vom Ladegleichrichter 5 fließt ein Ladestrom zum Kondensator 18. Wenn der Augenblickswert der Spannung an den Klemmen 7, 8 und somit auch am Ausgang des Ladegleichrichters 5 sinkt, wird die Ladung unterbrochen, und der Kondensator 18 entlädt sich durch die Seriendrossel 12 zu dem zwischen der Elektrode 16 und dem Arbeitsstück 11 brennenden Lichtbogen. Die Seriendrossel 12 ist mit einem I-Kern 20 versehen. Die Schweißdrosselwicklung 13 und die Zusatzwicklung sind auf dem Kern derart angebracht, daß sich die Durchflutungen der beiden Wicklungen summieren, wenn sie vom Entladestrom durchflossen werden. Die beiden Wicklungen sind auf dem Kern nebeneinander aufgewickelt, um eine lose magnetische Kupplung zu erhalten, wozu auch der offene magnetische Eisenkreis des I-Kernes beiträgt.

Da die EMK der Seriendrossel eine Änderung des magnetischen Flusses entgegenwirkt, nimmt zur Erhaltung des Amperewindungsgleichgewichtes der Strom $i_2$ (Fig. 2c), der durch die Zusatzwicklung 14 fließt, zu, während der Strom $i_1$ abnimmt und umgekehrt. Ein geringer Anteil des Schweißstromes fließt direkt vom Ladegleichrichter 5 durch die Seriendrossel zur Schweißstelle. Der Verlauf des Stromes $i_2$ ist hauptsächlich beeinflußt von dem Windungszahlverhältnis zwischen Zusatzwicklung und Schweißdrosselwicklung, der magnetischen Kupplung zwischen den beiden Wicklungen und der Kapazität des Kondensators.

Der Schweißstrom i (Fig. 2d), der durch die Schweißdrosselwicklung zum Lichtbogen fließt und die Summe des Stromes $i_1$ und des Stromes $i_2$ ist, wird daher ohne Unterbrechung aufrechterhalten, und der Lichtbogen erlöscht auch dann nicht, wenn die Spannung an den Klemmen 7, 8 zur Aufrechterhaltung des Lichtbogens zu gering ist.

Der Kondensator 18 und der Ladegleichrichter 5 können an verschiedene Anzapfungen 17 der Zusatzwicklung angeschlossen werden. Damit können die Schweißeigenschaften in einem gewissen Ausmaß beeinflußt werden. Die Wahl der Anzapfung wird zweckmäßigerweise durch Versuche bestimmt. Aus praktischen Gründen werden doch Kondensator 18 und Ladegleichrichter 5 gewöhnlich an die gleiche Anzapfung angeschlossen, was im allgemeinen ausreichend gute Schweißeigenschaften mit sich bringt.

Es ist zweckmäßig, doch keineswegs notwendig, in dem aus Ladegleichrichter 5 und Kondensator 18 gebildeten Ladekreis einen Strombegrenzungswiderstand 19 einzuschalten, der den Ladegleichrichter 5 vor zu großen Ladeströmen schützt. Die Ladung des Kondensators 18 wird dadurch etwas verzögert. Bei passender Dimensionierung von Widerstand, Kondensator und Ladegleichrichter bleibt der Einfluß auf die Schweißeigenschaften vernachlässigbar.

Bei Kurzschlüssen zwischen der Elektrode und dem Arbeitsstück, die beispielsweise beim Kurzlichtbogenschweißen wegen des tropfenförmigen Materialüberganges sehr zahlreich sind, hat es sich gezeigt, daß eine lose magnetische Kupplung zwischen den beiden Wicklungen wesentlich geringere Spritzverluste verursacht als eine feste Kupplung. Die Ursache ist vermutlich darin zu finden, daß die Änderung des Stromes $i_2$ bei Änderungen des Stromes i nicht so ausgeprägt ist wie bei fester Kupplung.

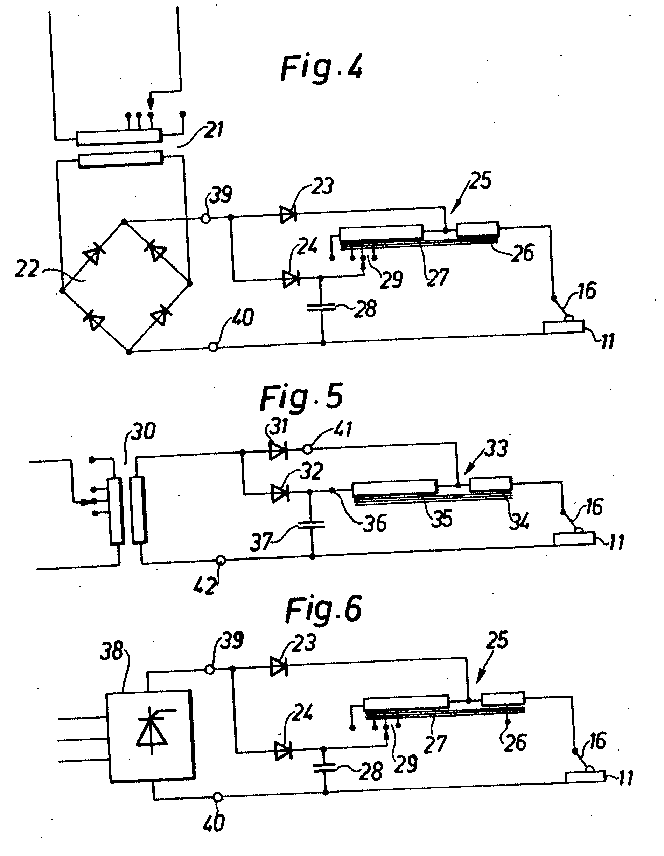

Die in Fig. 4 gezeigte Schaltung ist gegenüber derjenigen von Fig. 1 etwas vereinfacht. Eine Gleichrichterbrücke 22 ist an die Sekundärseite eines Einphasentransformators 21 angeschlossen. An eine der beiden Klemmen 39, 40 des Schweißgleichrichters 22 sind zwei Dioden 23, 24 angeschlossen. Der Hauptteil des Schweißstromes fließt durch die Diode 23 und eine Schweißdrosselwicklung 26 einer Seriendrossel 25. Durch die Diode 24 fließt im wesentlichen der Ladestrom für einen Kondensator 28. Sowohl Kondensator 28 als Diode 24 sind an eine Anzapfung 29 der Zusatzwicklung angeschlossen.

Die Wirkungsweise ist gleich derjenigen, die oben unter Hinweis auf Fig. 1 beschrieben wurde. Der aus Diode 24 und Kondensator 28 gebildete Ladestromkreis ist hier an die Klemmen 39, 40 des Schweißgleichrichters angeschlossen. Die Dioden 23, 24 verhindern einen Kurzschluß der Zusatzwicklung 27 während der Entladungsphase des Kondensators 28.

Die Schaltung der Fig. 5 ist noch weiter vereinfacht. An die Sekundärseite eines Einphasentransformators 30 sind zwei Dioden 31, 32 angeschlossen. Die Diode 31 dient als Schweißgleichrichter und wird vom Schweißstrom durchflossen. Die Diode 32 dient als Ladegleichrichter für einen Kondensator 37. Die hier gezeigte Seriendrossel 33 mit einer Schweißdrosselwicklung 34 und einer Zusatzwicklung 35 ist eine sehr vereinfachte Form der oben beschriebenen Ausführungen in Fig. 1 und Fig. 4. An das anzapfungslose Wicklungsende 36 der Zusatzwicklung 35 sind die Diode 32 und der Kondensator 37 angeschlossen. Der Mangel an Anzapfungen läßt wohl keine Wahl zur Beeinflussung der Schweißeigenschaften, verringert aber die Herstellungskosten, was die Nachteile kompensieren kann. Die Einweggleichrichtung mit der Diode 31 ergibt an den Klemmen 41, 42 eine pulsierende Spannung mit einer langen spannungslosen Lücke. Die Kapazität des Kondensators 37 muß daher verhältnismäßig groß sein, damit der Entladestrom den Lichtbogen aufrechterhalten kann, wenn die gleichgerichtete Spannung Null ist.

**Patentansprüche**

1. Einrichtung für das Lichtbogenschweißen mit einem an ein Wechselstromnetz angeschlossenen Schweißgleichrichter (6, 22, 31, 38) für die Abgabe einer pulsierenden Gleichspannung, die periodisch im Takt der Netzfrequenz oder Vielfachen davon während eines Teiles der Periode Null ist, mit einer mit Eisenkern versehenen Schweißdrossel, deren Wicklung (13, 25, 34) zwischen eine der beiden Klemmen des Schweißgleichrichters und eine aus Schweißelektrode (16) und Werkstück (11) gebildete, an die andere Schweißgleichrichterklemme angeschlossene Schweißstelle eingeschaltet ist, und mit einem mit beiden Klemmen verbundenen Glättungsstromkreis, der eine Glättungsdrossel (14, 27, 35) und einen Kondensator (18, 28, 37) enthält, dadurch gekennzeichnet, daß die Wicklung der Glättungsdrossel eine auf dem Eisenkern (20) der Schweißdrossel angebrachte Zusatzwicklung (14, 27, 35) ist, die mit einem Anschluß mit der Schweißdrosselwicklung (13, 26, 34) derart verbunden ist, daß die Wicklungen in Serie geschaltet sind, daß der Kondensator (18, 28, 37) zwischen einen anderen Anschluß der Zusatzwicklung (14, 27, 35) und der anderen Schweißgleichrichterklemme geschaltet ist und daß ein vom Wechselstromnetz gespeister Ladegleichrichter (5, 24, 32) an den anderen oder einen weiteren Anschluß (17, 29, 36) der Zusatzwicklung (14, 27, 35) angeschlossen ist, wobei das Windungsverhältnis zwischen Zusatzwicklung und Schweißdrosselwicklung, die magnetische Kupplung zwischen den beiden Wicklungen und die Kapazität des Kondensators derart gewählt sind, daß während des Schweißens der absolute Wert des Schweißstroms eine bestimmte Größe nicht unterschreitet.

2. Einrichtung nach Patentanspruch 1, dadurch gekennzeichnet, daß der Ladegleichrichter (24) durch die beiden Klemmen des Schweißgleichrichters (22, 38) an das Wechselstromnetz angeschlossen ist, wobei ein mit dem Ladegleichrichter (24) und der Zusatzwicklung (27) parallel geschalteter Gleichrichter (23) in seiner Durchlaßrichtung zumindest einen Teil des vom Wechselstromnetz an die Schweißstelle (11, 16) abgegebenen Stromes führt.

3. Einrichtung nach Patentanspruch 1 oder 2, dadurch gekennzeichnet, daß die Zusatzwicklung (14, 27) mit Anzapfungen (17, 29) für den Anschluß des Kondensators (18, 28) und des Ladegleichrichters (5, 24) versehen ist.

4. Einrichtung nach Patentanspruch 3, dadurch gekennzeichnet, daß der Ladegleichrichter (5, 24) und der Kondensator (18, 28) an eine gleiche Anzapfung der Zusatzwicklung (17, 29) angeschlossen sind.

5. Einrichtung nach einem der Patentansprüche 1 bis 4, dadurch gekennzeichnet, daß die Schweißdrosselwicklung (13, 26, 34) mit der Zusatzwicklung (14, 27, 35) magnetisch lose gekuppelt ist.

6. Einrichtung nach Patentanspruch 5, dadurch gekennzeichnet, daß die Schweißdrosselwicklung und die Zusatzwicklung auf einem nicht geschlossenen Eisenkern nebeneinander aufgewickelt sind.

7. Einrichtung nach Patentanspruch 6, dadurch gekennzeichnet, daß der Eisenkern ein I-Kern (20) ist.

## Claims

1. Arc welding apparatus with a welding rectifier (6, 22, 31, 38) connected to an alternating-current power supply to deliver a pulsatory direct voltage which is cyclically zero for a part of the cycle in the rhythm of the power supply frequency or multiples thereof, with a welding choke provided with an iron core, the winding (13, 26, 34) of which is interposed between one of the two terminals of the welding rectifier and a welding point formed by welding electrode (16) and workpiece (11) and connected to the other welding rectifier terminal, and with a smoothing circuit connected to both terminals, which comprises a smoothing choke (14, 27, 35) and a capacitor (18, 28, 37), charcterised in that the winding of the smoothing choke is an auxiliary winding (14, 27, 35) fitted on the iron core (20) of the welding choke, and connected by one connection to the welding choke winding (13, 26, 34) so that the windings are wired in series, that the capacitor (18, 28, 37) is wired between another connection of the auxiliary winding (14, 27, 35) and the other welding rectifier terminal, and that a charging rectifier (5, 24, 32) fed by the alternating-current power supply is connected to the other or a further connection (17, 29, 36) of the auxiliary winding (14, 27, 35), whilst the turns ratio between auxiliary winding and welding choke winding, the magnetic coupling between the two windings and the capacitance of the capacitor are chosen so that the absolute value of the welding current does not fall below a specific value during welding.

2. Apparatus according to patent claim 1, characterised in that the carging rectifier (24) is connected by the two terminals of the welding rectifier (22, 38) to the alternating-current power supply, whilst in its lowresistance direction a rectifier (23) wired in parallel with the charging rectifier (24) and with the auxiliary winding (27) carries at least a part of the current delivered to the welding point (11, 16) by the alternatingcurrent power supply.

3. Apparatus according to patent claims 1 or 2, characterised in that the auxiliary winding (14, 27) is provided with tappings (17, 29) for the connection of the capacitor (18, 28) and of the charging rectifier (5, 24).

4. Apparatus according to patent claim 3, characterised in that the charging rectifier (5, 24) and the capacitor (18, 28) are connected to the same tapping of the auxiliary winding (17, 29).

5. Apparatus according to one of patent claims 1 to 4, characterised in that the welding choke winding (13, 26, 34) is loosely coupled magnetically with the auxiliary winding (14, 27, 35).

6. Apparatus according to patent claim 5, characterised in that the welding choke winding and the auxiliary winding are wound juxtaposed on an unclosed iron core.

7. Apparatus according to patent claim 6, characterised in that the iron core is an I-shaped core (20).

## Revendications

1. Dispositif pour le soudage à l'arc, comprenant un redresseur de soudage (6, 22, 31, 38) raccordé au réseau à courant alternatif en vue d'émettre une tension continue pulsée, qui est périodiquement nulle en synchronisme avec la fréquence du réseau ou avec un multiple de cette dernière pendant une partie de la période, comprenant une self de soudage munie d'un noyau de fer, dont l'enroulement (13, 26, 34) est inséré entre l'une des deux bornes du redresseur de soudage et une position de soudage raccordée à l'autre borne redresseuse de soudage et formée par l'électrode de soudage (16) et la pièce en oeuvre (11), et comprenant un circuit de filtrage, relié aux bornes et contenant une self de filtrage (14, 27, 35) et un condensateur (18, 28, 37), caractérisé en ce que l'enroulement de la self de lissage est un enroulement additionnel (14, 27, 35) disposé sur le noyau de fer (20) de la self de soudage, lequel enroulement est relié par une borne à l'enroulement de la self de soudage (13, 26, 34) de manière que les enroulements soient montés en série, le condensateur (18, 28, 37) est monté entre une autre connexion (17, 29, 36) de l'enroulement additionnel (14, 27, 35) et l'autre borne de redresseur de soudage, et un redresseur de charge (5, 24, 32) alimenté par le réseau à courant alternatif est raccordé à l'autre connexion ou à une connexion supplémentaire (17, 29, 36) de l'enroulement additionnel (14, 27, 35), le rapport entre l'enroulement additionnel et l'enroulement de la self de soudage, le couplage magnétique entre les deux enroulements et la capacité du condensateur étant choisi de manière que, pendant le soudage, la valeur du courant de soudage ne passe pas au-dessous d-une valeur déterminée.

2. Dispositif selon la revendication 1, caractérisé en ce que le redresseur de charge (24) est raccordé au réseau à courant alternatif par les deux bornes du redresseur de soudage (22, 38), un redresseur (23), monté en parallèle avec le redresseur de charge (24) et l'enroulement additionnel (27), laissant passer dans le sens direct au moins une partie du courant envoyé à la position de soudage (11, 16) par le réseau à courant alternatif.

3. Dispositif selon la revendication 1 ou 2, caractérisé en ce que l'enroulement additionnel (14, 27) est muni de branchements (17, 29) destinés à la connexion du condensateur (18, 28) et du redresseur de charge (5, 24).

4. Dispositif selon la revendication 3, caractérisé en ce que le redresseur de charge (5, 24) et le condensateur (18, 28) sont raccordés au même branchement de l'enroulement additionnel (17, 29).

5. Dispositif selon l'une quelconque des revendications 1 à 4, caractérisé en ce que l'enroulement de la self de soudage (13, 26, 34) est couplé magnétiquement de facon libre à l'enroulement additionnel (14, 27, 35).

6. Dispositif selon la revendication 5, caractérisé en ce que l'enroulement de la self de soudage et l'enroulement additionnel sont bobinés l'un à côté de l'autre sur un noyau de fer non fermé.

7. Dispositif selon la revendication 6, caractérisé en ce que le noyau de fer (20) est un noyau en I.

Fig. 1

Fig. 2a

Fig. 2b

Fig. 2c

Fig. 2d

Fig. 3

# Fig.4

# Fig.5

# Fig.6